Europäisches Patentamt

European Patent Office

Office européen des brevets

(11) Veröffentlichungsnummer: **0 251 053 B1**

## EUROPÄISCHE PATENTSCHRIFT

(45) Veröffentlichungstag der Patentschrift: **21.08.91**

(21) Anmeldenummer: **87108768.0**

(22) Anmeldetag: **19.06.87**

(51) Int. Cl.⁵: **A01C 7/08**, A01C 19/04, A01B 49/06, A01F 15/00

(54) Sämaschine.

(30) Priorität: 28.06.86 DE 3621771
29.10.86 DE 3636768

(43) Veröffentlichungstag der Anmeldung:
**07.01.88 Patentblatt 88/01**

(45) Bekanntmachung des Hinweises auf die
Patenterteilung:
**21.08.91 Patentblatt 91/34**

(84) Benannte Vertragsstaaten:
**AT DE FR GB NL**

(56) Entgegenhaltungen:
EP-A- 0 009 133     EP-A- 0 049 330
CH-A- 445 177        DE-A- 3 232 293
US-A- 4 060 181     US-A- 4 124 079

(73) Patentinhaber: **Amazonen-Werke H. Dreyer GmbH & Co. KG
Am Amazonenwerk 9-13
W-4507 Hasbergen-Gaste(DE)**

(72) Erfinder: **Arnoldt, Friedrich
Am Anger 1
W-3447 Meissner-Gernerode(DE)**

## Beschreibung

Die Erfindung betrifft eine kombination gemäß des Oberbegriffes des Patentanspruches 1.

Eine deraritige kombination ist bereits durch die schweizerische Patentschrift 445 177 bekannt geworden. Bei dieser bekannten Sämaschine ist der zentrale Vorratsbehälter mit dem zentralen Dosiersystem im Frontanbau an dem Schlepper angeordnet. Hinter dem Schlepper ist die eigentliche Sämaschine mit den Säscharen angeordnet, die das Saatgut im Boden ablegen. Von dem zentralen Vorratsbehälter aus, der im Frontanbau an dem Schlepper angeordnet ist, wird über eine Druckluftleitung das von der zentralen Dosierung, die an dem vorderen Vorratsbehälter angeordnet ist, dosierte Saatgut zu einem Verteilerkopf geblasen, von dem aus das zentral dosierte Saatgut auf die zu den einzelnen Säscharen führenden Saatleitungen aufgeteilt wird.

Von Nachteil ist bei dieser bekannten Sämaschine, daß durch die Luftförderung des Saatgutes innerhalb der Druckluftleitung und durch den Aufprall der Saatkörner an den Wänden des Verteilerkopfes die Beize von dem Saatgut abgerieben wird und darüber hinaus die einzelnen Saatkörner derart beschädigt werden, daß es zu unvermeidlichen Keimschäden kommt. Darüber hinaus ist die Aufteilung des zentral dosierten Saatgutes durch den Verteilerkopf auf die einzelnen Saatleitungen nicht immer genau genug.

Der Erfindung liegt nun die Aufgabe zugrunde, die bekannte Sämaschine dahingehend zu verbessern, daß ein Abrieb von Beize und Keimschäden an dem Saatgut verhindert und gleichzeitig eine gleichmäßigere Dosierung des Saatgutes auf die einzelnen Säschare erreicht wird.

Diese Aufgabe wird erfindungsgemäß durch das Kennzeichen des Patentanspruches 1 gelöst. Infolge dieser Maßnahmen wird das Saatgut aus dem zentralen Vorratsbehälter über eine Fördereinrichtung zu einem Zwischenbehälter geführt, von dem aus das Saatgut über jeder Saatleitung zugeordneten Dosierorganen einzeln zudosiert werden kann. Vor allem die Unregelmäßigkeit, die durch die lange Förderung durch den Druckluftstrom von der zentralen Dosierung bis zu den Säscharen über den Verteilerkopf bei dem bekannten System auftreten, werden durch die erfindungsgemäße Lösung ausgeschaltet. Das Saatgut wird von den in größtmöglicher Nähe zu den Säscharen gelegenen, an dem Zwischenbehälter angeordneten Dosierorganen in äußerst genauer Weise zudosiert. Dadurch, daß die Fördervorrichtung ein mechanisches Förderelement, beispielsweise ein Schnecken- oder Kettenförderer ist, wird ein äußerst schonender Transport des Saatgutes zu dem Zwischenbehälter erreicht.

Des weiteren ist erfindungsgemäß vorgesehen, daß das Saatgut von dem Vorratsbehälter aus über das mechanische Förderelement zu dem Zwischenbehälter und das überschüssige Saatgut von dem Zwischenbehälter über ein weiteres mechanisches Förderelement zum Vorratsbehälter zurückgeführt wird. Hierdurch ergibt sich eine äußerst einfache Konstruktion und Bauweise der erfindungsgemäßen Sämaschine. Darüber hinaus steht ständig genügend Saatgut für die Dosierorgane im Zwischenbehälter zur Dosierung zu den Säscharen Zur Verfügung. Damit der Zwischenbehälter nicht überläuft, ist erfindungsgemäß vorgesehen, daß das Saatgut über ein Kreislaufsystem vom Vorratsbehälter zu dem Zwischenbehälter geführt wird. Als weiterer Vorteil ergibt sich durch dieses Kreislaufsystem das eine gute Durchmischung und auch eine Beizung des Saatgutes in der Sämaschine selbst vorgenommen werden kann.

Damit das Saatgut aus der Förderschnecke oder dem Kettenförderer in den Zwischenbehälter gelangen kann, ist erfindungsgemäß in einfacher Weise vorgesehen, daß in der Wandung des mechanischen Förderelementes im Bereich des Zwischenbehälters Löcher oder Schlitze angeordnet sind. Diese Löcher oder Schlitze können entsprechen der Ausbringmenge von Saatgut einstellbar sein. Damit ständig genügend Saatgut im Zwischenbehälter für die Dosierung über die Dosierorgane zu den Säscharen vorhanden ist, ist erfindungsgemäß vorgesehen, daß die Förderleistung des Förderelementes so bemessen ist, daß sie zumindest genauso groß wie die maximale bzw. die momentane Ausbringmenge von Saatgut ist.

Des weiteren ist erfindungsgemäß vorgesehen, daß der zentrale Vorratsbehälter auf ein in Frontanbau betriebenes und auf der Bodenoberfläche abgestütztes Bodenbearbeitungsgerät angeordnet ist. Hierdurch wird erreicht, daß der zentrale Vorratsbehälter bzw. das sich in ihm befindliche Saatgut zusätzlich das sich im Frontanbau befindliche Bodenbearbeitungsgerät in vorteilhafter Weise belastet.

Des weiteren ist erfindungsgemäß vorgesehen, daß der Zwischenbehälter mit den antreibbaren Dosierorganen auf bzw. hinter einer hinter dem Ackerschlepper angeordneten Bodenbearbeitungsmaschine oder -gerät angeordnet ist, und daß die Säschare hinter dieser Bodenbearbeitungsmaschine oder - gerät angeordnet sind. Hierdurch läßt sich eine sehr einfache Anordnung des Zwischenbehälters und der Säschare realisieren.

In einer bevorzugten Ausführungsform ist erfindungsgemäß vorgesehen, daß die Sämaschine Bestandteil einer geschlossenen Bestellkombination ist, die aus einem Ackerschlepper, einer Sämaschine mit Vorratsbehälter und Dosiersystem und Säscharen sowie Bodenbearbeitungsgeräten und -maschinen besteht. Hierbei ist dann erfindungsgemäß vorgesehen, daß im Frontanbau an den Ackerschlepper eine vorzugsweise lenkbare Bodenwalze angeordnet ist, auf der ein vorzugsweise großer zentraler Vorratsbehälter angeordnet ist, daß hinter dem Ackerschlepper im Heckanbau ein vorzugsweise zapfwellenbetriebes Bodenbearbeitungsgerät angeordnet ist, auf welches ein Zwischenbehälter mit Dosierorganen und hinter welches Säschare angeordnet sind, denen das Saatgut aus dem Zwischenbehälter über die Dosierorgane in einstellbaren Mengen über Saatleitungen zugeleitet wird, und daß dem Zwischenbehälter von dem Vorratsbehälter aus über ein mechanisches Kreislaufsystem, welches vorzugsweise als flexiebler Schnekkenförderer oder Kettenförderer ausgebildet ist, Saatgut in genügender Menge zugeführt wird. Infolge dieser Maßnahme ergibt sich eine äußerst vorteilhafte und kompakte Bestellkombination, wobei eine äußerst günstige Gewichtsverteilung der Bestellkombination im Hinblick auf den Anbau an den Ackerschlepper erreicht wird, und wobei weiterhin das Saatgut äußerst schonend vom Vorratsbehälter bis zu den Säscharen gefördert und unbeschädigt im Boden abgelegt wird.

Des weiteren wird durch das mechanische Fördersystem erreicht, daß keine Verstopfungen in der Förderleitung auftreten können, wie dies bei absinkender Luftgeschwindigkeit beim Stand der Technik der Fall ist. Darüber hinaus wird das Saatgut von dem in der Nähe der Säschare angeordneten Dosierorganen, die an dem Zwischenbehälter angeordnet sind, eine äußerst große Ablegegenauigkeit sowie eine gleichmäßige Dosierung der Saatmenge auf alle Saatleitungen erreicht.

Des weiteren ist in einer Ausführungsform der Erfindung vorgesehen, daß in dem Zwischenbehälter Schalter angeordnet sind, über die der Antrieb der Fördervorrichtung ein- und abzuschalten ist. Infolge dieser Maßnahmen läßt sich die Beschikkung des Zwischenbehälters mit Saatgut aus dem vor dem Schlepper angeordneten Vorratsbehälter wesentlich vereinfachen, da es nicht mehr notwendig ist, daß Saatgut in einem Kreislaufsystem zu fördern. Hierbei ist erfindungsgemäß vorgesehen, daß der eine Schalter den minimalen Füllstand und der andere Schalter den maximalen Füllstand des Saatgutes im Zwischenbehälter bestimmt. Mit Hilfe dieser Schalter läßt sich die Saatgutzufuhr aus dem Frontvorratsbehälter zu dem Zwischenbehälter derart selbsttätig steuern, so daß der Zwischenbehälter immer einen ausreichenden Saatgutvorrat aufweist, der eine einwandfreie Versorgung der Säschare mit Saatgut gewährleistet. Fällt der eine einwandfreie Versorgung der Säschare gewährleistende Füllstandspegel des Zwischenbehälters unterhalb einer bestimmten Füllstandshöhe, wird der Antrieb für die Fördereinrichtung eingeschaltet, so daß das Saatgut aus dem Frontvorratsbehälter in den Zwischenbehälter gefördert wird. Nach Erreichen des maximalen Füllstandes im Zwischenbehälter schaltet der den maximalen Füllstand bestimmende Schalter den Antrieb der Fördervorrichtung aus, so daß kein Saatgut mehr von dem Frontvorratsbehälter gefördert wird. Dadurch, daß der Saatgutvorrat des Zwischenbehälters in Zeitabständen automatisch nachgefüllt wird, wird die Beschickung des Zwischenbehälters wesentlich vereinfacht, da es nicht notwendig ist, ständig Saatgut zu fördern, wozu ein Kreislaufsystem vorhanden sein muß. Da das Nachfüllen des Zwischenbehälters in Abhängigkeit von seinem Füllstand geregelt wird, entfallen die das zuviel in den Zwischenbehälter geförderte Saatgut wieder in den Frontvorratsbehälter zurückfördernden Bauteile der Fördervorrichtung, so daß der Aufbau vereinfacht wird.

Selbstverständlich ist es auch möglich, daß die Fördervorrichtung vom vorderen Vorratsbehälter zum zwischenbehälter als pneumatische Fördervorrichtung ausgebildet ist, wobei über die Schalter die Förderung des Saatgutes vom Vorratsbehälter zum Zwischenbehälter ein bzw. abzuschalten ist.

Weiteren Einzelheiten der Erfindung sind den übrigen Unteransprüchen, der Beispielsbeschreibung und den Zeichnungen zu entnehmen. Hierbei zeigen:

Fig. 1    die erfindungsgemäße Sämaschine als Bestandteil der Bestellkombination in Prinzipdarstellung und in der Seitenansicht,

Fig. 2    die Sämaschine in der Draufsicht,

Fig. 3    die erfindungsgemäße Sämaschine als Bestandteil einer Bestellkombination in Prinzipdarstellung und in der Seitenansicht und

Fig. 4    die Bestellkombination in der Draufsicht.

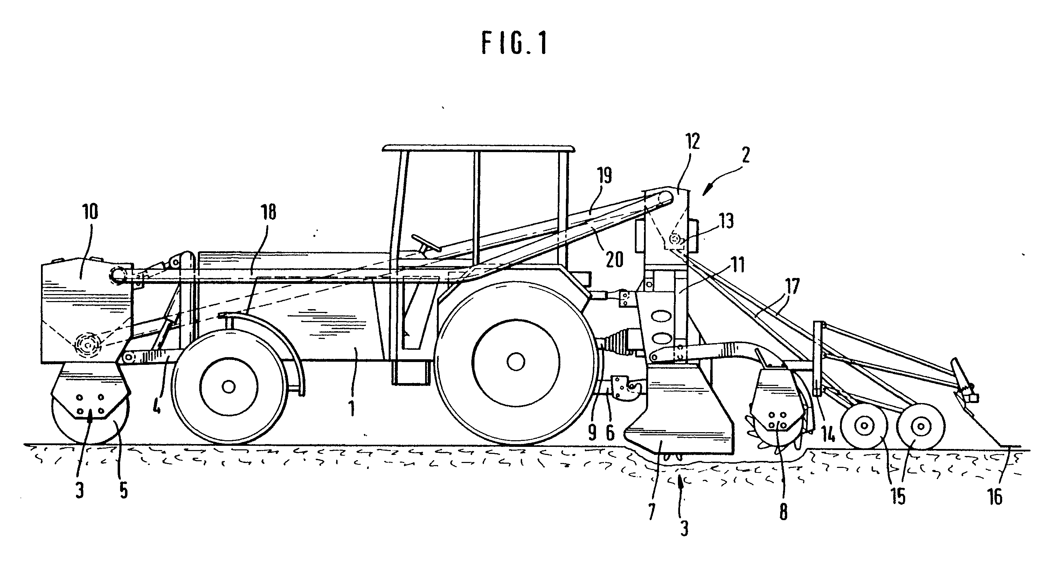

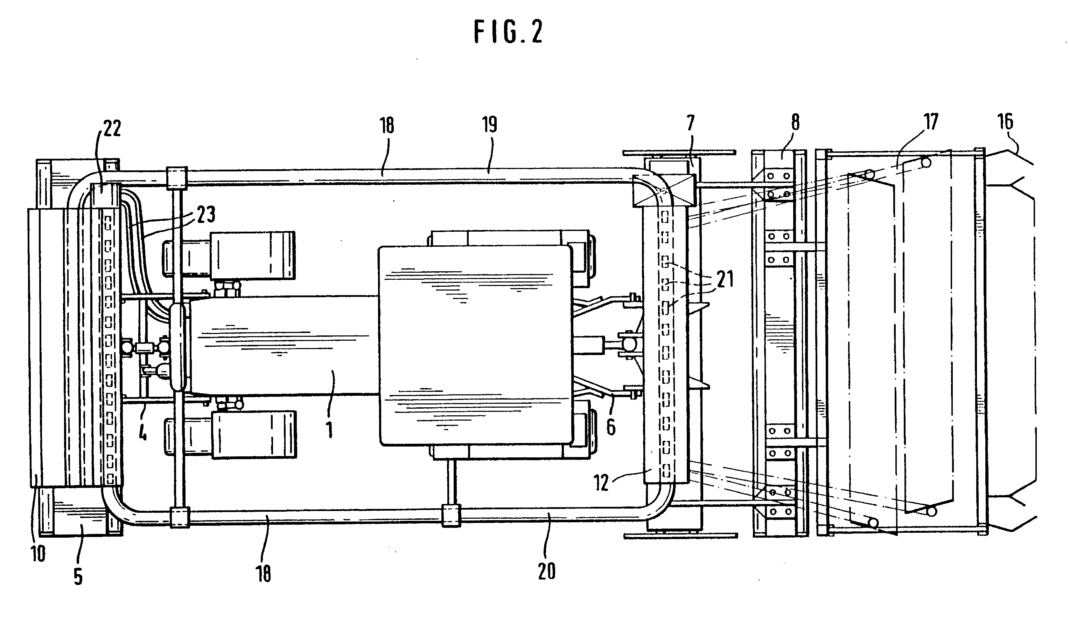

Die Sämaschine gemäß Fig. 1 und 2 ist Bestandteil einer geschlossenen Bestellkombination, die aus dem Ackerschlepper 1, der Sämaschine 2 und dem Bodenbearbeitungsgeräten 3 besteht. An dem Frontkraftheber ist im Frontanbau die lenkbare Bodenwalze 5 angeordnet. Hinter dem Ackerschlepper 1 ist an dem Dreipunktkaftheber 6 das als Kreiselegge 7 ausgebildete Bodenbearbeitungsgerät 3 angeordnet. Hinter der Kreiselegge 7 ist die Packerwalze 8 angeordnet, die das Saatbett andrückt und gleichzeitig die Arbeitstiefe der Kreiselegge 7 bestimmt. Die Kreiselegge 7 wird von der Zapfwelle des Schleppers über die Gelenkwelle 9 angetrieben. Auf der im Frontanbau betriebenen Bodenwalze 5 ist der zentrale Vorratsbehälter 10 der Sämaschine 2 befestigt. Auf der Kreiselegge 7 ist mittels eines Tragrahmens 11 ein zwischenbehälter 12 angeordnet. In dem unteren Bereich des zwischenbehälters 12 sind die Dosierorgane 13 des Dosiersystems der Sämaschine angeordnet. Hinter der Kreiselegge 7 und der Packerwalze 8 sind über einem Rahmen 14 die Säschare 15 und der Saatstriegel 16 angeordnet. Von jedem Dosierorgan 13, die nebeneinander an dem zwischenbehälter 12 angeordnet sind, führt jeweils eine Saatleitung 17 zu einem Säschar 15. Die Dosierorgane 13 sind auf einer Dosierwelle in bekannter und daher nicht näher dargestellter Weise angeordnet. Über die Dosierwelle werden die Dosierorgane von einem einstellbaren Antrieb in nicht dargestellter Weise angetrieben. Es ist möglich und mit in die Erfindung eingeschlossen, daß die über die Dosierorgane 13 ausgebrachte Saatgutmenge, die den Säscharen 15 über die Saatleitungsrohre 17 zugeführt wird, über eine elektronische Ausbringmengenregelung geregelt werden kann.

Zwischen dem zentralen und großen Vorratsbehälter 10 und dem Zwischenbehälter 12 ist die als flexibler Schneckenförderer 18 ausgebildete Fördervorrichtung angeordnet. Das sich im zentralen Vorratsbehälter 10 befindliche Saatgut wird über den Schneckenförderer 18 auf seiner Zubringseite 19 aus dem unteren Bereich des Vorratsbehälters 10 zu dem Zwischenbehälter 12 gefördert. Weiterhin fördert der Schneckenförderer 18 auf seiner Rückbringseite 20 das überschüssige Saatgut von dem Zwischenbehälter 12 wieder zum zentralen Vorratsbehälter 10 zurück. Somit ergibt sich ein Kreislaufsystem des Saatgutes vom Vorratsbehälter 10 zum Zwischenbehälter 12 und wieder zum Vorratsbehälter 10 zurück. In dem Bereich des Zwischenbehälters 12 sind in der Wandung des Schneckenförderers 18 die Schlitze 21 angeordnet, durch die das von dem Schneckenförderer 18 vom Vorratsbehälter 10 zu dem Zwischenbehälter 12 geförderte Saatgut in den Zwischenbehälter 12 fällt. Die Förderleistung des Schneckenförderers 18 ist so bemessen, daß ständig genügend Saagut im Zwischenbehälter 12 vorhanden ist, welches die Dosierorgane 13 den Säscharen 15 in einstellbarer Weise zuführen. Sollte zu viel Saatgut über den Schneckenförderer 18 auf der Zubringseite 19 dem Zwischenbehälter 12 zugeführt werden, so wird dieses Saatgut dann einfach über die Rückbringseite 20 von dem Schneckenförderer 18 im oberen Bereich des Vorratsbehälters 10 in den Vorratsbehälter 10 zurückgeleitet. Sowohl der Vorratsbehälter 10 als auch der Zwischenbehälter 12 sind mit einer Abdeckung abgedeckt. Der Schneckenförderer 18 wird von einem Hydraulikmotor 22, dessen Antriebsdrehzahl einstellbar sein kann, über die Hydraulikschläuche 23 von der Hydraulikanlage des Ackerschleppers angetrieben. Die Förderschnecke 18 zieht in dem unteren Bereich des Vorratsbehälters 10 das Saatgut aus dem Vorratsbehälter 8 auf der Einbringseite 19 ab und führt es dann in den sich waagerecht im oberen Bereich quer durch den Zwischenbehälter erstreckenden Bereich der Förderschnecke 18 dem Zwischenbehälter 12 zu, wo es durch die Schlitze 21 in den Zwischenbehälter 12 fällt. Ist so viel Saatgut über die Schlitze 21 in den Zwischenbehälter 12 gelangt, daß das Saatgut sich direkt unterhalb der Schlitze befindet und somit kein Saatgut mehr über die Schlitze 21 in den Zwischenbehälter 12 fallen kann bzw. wenn weniger Saatgut in den Zwischenbehälter 12 fallen kann als die Fördermenge des Schneckenföderers 18 beträgt, so wird dieses überschüssige Saatgut auf der Rückbringseite 20 des Schneckenförderers 18 wieder im oberen Bereich des Vorratsbehälters 10 in den Vorratsbehälter 10 zurückgeleitet. Die Dosierorgane 13 dosieren das Saatgut aus dem Zwischenbehälter 12 über die Saatleitungsrohre 17 den Säscharen 15 in der gewünschten Menge zu

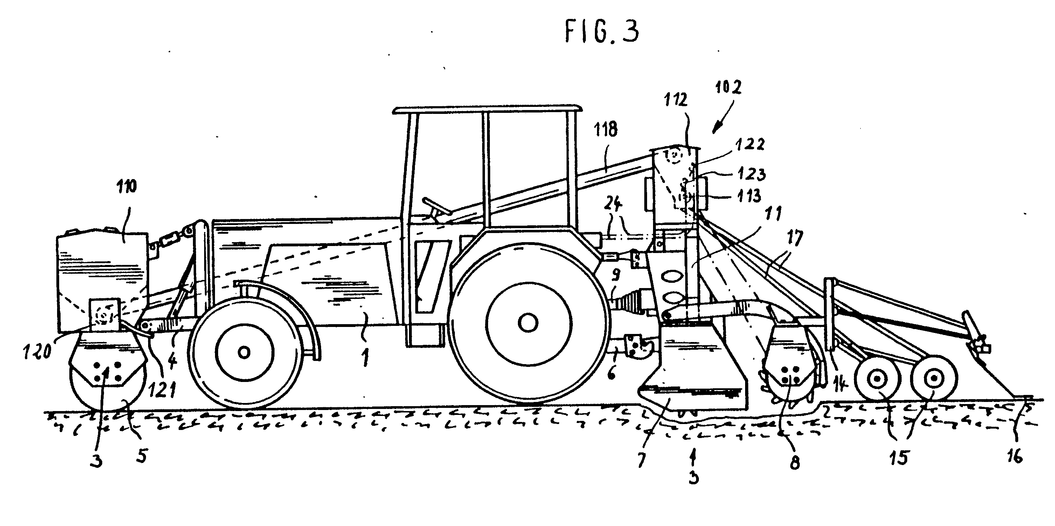

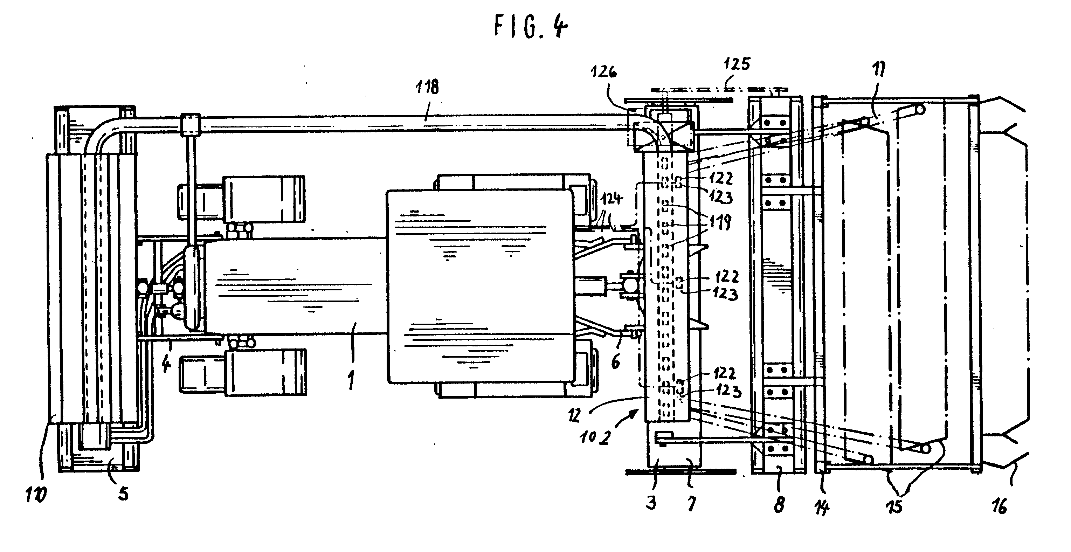

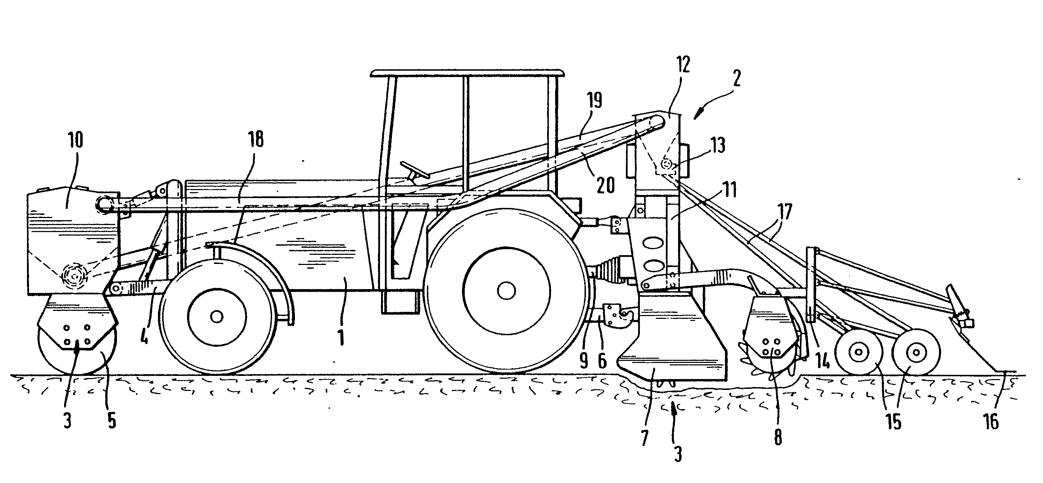

Die Sämaschine gemäß Fig. 3 und 4 ist ebenfalls Bestandteil einer geschlossenen Bestellkombination, die aus dem Ackerschlepper 1, der Sämaschine 102 und dem Bodenbearbeitungsgerät 3 besteht. An dem Frontkraftheber 4 ist im Frontanbau die lenkbare Bodenwalze 5 angeordnet. Hinter dem Ackerschlepper 1 ist an dem Dreipunktkraftheber 6 das als Kreiselegge 7 ausgebildete Bodenbearbeitungsgerät 3 angeordnet. Hinter der Kreiselegge 7 befindet sich die Packerwalze 8, die das Saatbett andrückt und gleichzeitig die Arbeitstiefe der Kreiselegge 7 bestimmt. Die Kreiselegge 7 wird von der Zapfwelle des Schleppers über die Gelenkwelle 9 angetrieben. Auf der im Frontanbau betriebenen Bodenwalze 5 ist der zentrale Vorratsbehälter 110 der Sämaschine 102 befestigt. Auf der Kreiselegge 7 ist mittels eines Tragrahmens 11 ein Zwischenbehälter 112 aufgesattelt. In dem unteren Bereich des Zwischenbehälters 112 sind die Dosierorgane 113 des Dosiersystems der Sämaschine angeordnet. Hinter der Kreiselegge 7 und der Packerwalze 8 sind über einem Rahmen 14 die Säschare 15 und der Saatstriegel 16 angeordnet. Von jedem Dosierorgan 113, die nebeneinander an dem zwischenbehälter 112 angeordnet sind, führt jeweils eine Saatleitung 17 zu einem Säschar 15. Die Dosierorgane 13 sind auf einer Dosierwelle in bekannter und daher nicht näher dargestellter Weise befestigt. Über die Dosierwelle werden die Dosierorgane 13 von einem einstellbaren Antrieb, der von der Packerwalze 8 angetrieben wird, angetrieben. Die Dosierorgane 13 dosieren das Saatgut aus dem Zwischenbehälter 112 über die Saatleitungsrohre 17 den Säscharen 15 in der gewünschten Menge zu. Es ist möglich und mit in die Erfindung eingeschlossen, daß die über die Dosierorgane 13 ausgebrachte Saatgutmenge, die den Säscharen 15 über die Saatleitungsrohre 17 zugeführt wird, über eine elektronische Ausbringmengenregelung geregelt werden kann.

Zwischen dem zentralen und großen Vorratsbehälter 10 und dem Zwischenbehälter 112 ist die als flexibler Schneckenförderer 118 ausgebildete Fördervorrichtung angeordnet. Das sich im zentralen Vorratsbehälter 110 befindliche Saatgut wird über den Schneckenförderer 118 aus dem unteren Bereich des Vorratsbehälters 110 zu dem Zwischenbehälter 112 gefördert. In dem Bereich des Zwischenbehälters 112 sind in der Wandung des Schneckenförderers 118 die Schlitze 119 angeordnet, durch die das von dem Schneckenförderer 118 vom Vorratsbehälter 110 zu dem Zwischenbehälter 112 geförderte Saatgut in den zwischenbehälter 112 fällt.

Der Schneckenförderer 118 wird von einem Hydraulikmotor 120, dessen Antriebsdrehzahl einstellbar sein kann, über die Hydraulikschläuche 121 von der Hydraulikanlage des Ackerschleppers angetrieben. Die Förderschnecke 118 zieht in dem unteren Bereich des Vorratsbehälters 110 das Saatgut aus dem Vorratsbehälter 110 ab und führt es dann in den sich waagerecht im oberen Bereich quer durch den Zwischenbehälter 112 erstreckenden Bereich der Förderschnecke 118 dem Zwischenbehälter 112 zu, wo es durch die Schlitze 119 in den Zwischenbehälter 112 fällt.

Im Inneren des Zwischenbehälters 112 sind die als Mikroschalter ausgebildeten Schalter 122 und 123 in unterschiedlichen Höhen befestigt und dienen zur Ermittlung des Saatgutfüllstandes des sich in dem Zwischenbehälter 112 befindlichen Saatgutes. Diese Schalter 122 und 123 sind über die Leitungen 124 derart mit dem Steuergerät der Schlepperhydraulik verbunden, so daß durch entsprechende Impulse dieser Schalter 122 und 123 der Hydraulikmotor 120 mit Hydrauliköl beaufschlagt wird oder die Beaufschlagung des Hydraulikmotors 120 mit Hydrauliköl unterbrochen wird, wodurch der Antrieb des Förderschnecke 118 ein bzw. ausgeschaltet wird. Hierbei bestimmen die oberen Schalter 122 den maximalen Füllstand des Zwischenbehälters 112 und die unteren Schalter 123 bestimmen den minimalen Füllstand. Befindet sich nun nur sehr wenig Saatgut in dem Zwischenbehälter 112, so daß der Saatgutpegel bis in den Bereich der untersten Schalter 123 abgesunken ist, wird mittels dieser Schalter 123 eine Betätigung des Steuergerätes der Schlepperhydraulik herbeigeführt, was zu einer Beaufschlagung des Hydraulikmotors 120 mit Hydrauliköl und somit zum Antrieb des Schneckenförderers 118 führt. Jetzt zieht die Förderschnecke 118 im unteren Bereich des Vorratsbehälters 110 Saatgut ab und führt es dann in den sich waagerecht im oberen Bereich quer durch den Zwischenbehälter 112 erstreckenden Bereich der Förderschnecke 118 dem Zwischenbehälter 112 zu, wo es durch die Schlitze 119 in den Zwischenbehälter 112 fällt. Die Förderschnecke 118 fördert nun so lange Saatgut vom Vorratsbehälter 110 in den Zwischenbehälter 112, bis der über die gesamte Breite des Zwischenbehälters 112 erstreckende Saatgutpegel eine derartige Höhe erreicht hat, so daß die nebeneinander angeordneten oberen Schalter 122 alle mit Saatgut bedeckt sind. Erst nach dem alle Schalter 122 mit Saatgut bedeckt sind, werden von diesen Schaltern 122 Signale erzeugt, die zur Betätigung des Steuergerätes der Schlepperhydraulik führen und die Beaufschlagung des Hydraulikmotors 120 mit Hydrauliköl unterbrechen, so daß die Förderschnecke 118 nicht mehr angetrieben wird. Das Abschalten des Antriebes der Förderschnecke 118 erfolgt nur, wenn alle nebeneinande angeordneten Schalter 122 mit Saatgut bedeckt sind, wobei das Einschalten des Antriebes der Förderschnecke 118 bereits erfolgt, wenn der Saatgutpegel aus irgendeinem Grunde nur an einer Stelle des Zwischenbehälters 112 bis in den Bereich nur eines unteren Schalters 123 absinkt. Hierdurch wird gewährleistet, daß die Dosierorgane 113 immer mit genügend Saatgut versorgt werden.

Die Förderschnecke 118 kann beispielsweise auch als zweiteilige Förderschnecke ausgebildet sein. Hierbei besteht die eine Förderschnecke dann aus dem Bereich, der sich unterhalb des zentralen Vorratsbehälters 110 und seitlich des Schleppers 1 erstreckt, wobei die andere Förderschnecke im Zwischenbehälter 112 angeordnet ist und über den mit strichpunktierten Linien dargestellten Antrieb 125 von der Packerwalze 8 angetrieben wird. Die sich unterhalb des zentralen Vorratsbehälters 110 und seitlich des Schleppers 1 befindliche Förderschnecke fördert das Saatgut aus dem Vorratsbehälter 110 dann in den seitlich des Zwischenbehälters 112 angeordneten und mit strichpunktierten Linien dargestellten Übergabebehälter 126, aus dem dann die sich im Zwischenbehälter 112 befindliche Förderschnecke das Saatgut in das Innere des Zwischenbehälters 112 fördert. Hierbei erfolgt das Ein- und Ausschalten des Hydraulikmotors 120 zum Antrieb der sich im Vorratsbehälter 110 und seitlich des Schleppers 1 befindlichen Förderschnecke über die Schalter 122 und 123 in bereits erwähner Weise, wobei die sich im Zwischenbehälter 112 befindliche Förderschneck immer von der Packerwalze 8 angetrieben wird.

**Patentansprüche**

1. Kombination bestehend aus einem Ackerschlepper und einer Sämaschine mit einem zentralen Vorratsbehälter (10), der im Frontanbau von dem Ackerschlepper getragen wird, und mit einem Dosiersystem (13), welches geeignet ist das dosierte Saatgut zu den hinter dem Ackerschepper angeordneten Säscharen (15) oder anderen Ausbringelementen in einstellbaren Mengen zuzufüren, wobei eine Fördereinrichtung (18) für die Förderung des Saatgutes von dem Vorratsbehälter zu den Säscharen (15) vorgesehen ist, dadurch gekennzeichnet, daß hinter dem Ackerschlepper ein Zwischenbehälter (12) angeordnet ist, daß die Fördereinrichtung (18) so angeordnet ist, daß sie diesem Zwischenbehälter (12) das Saatgut aus dem zentralen Vorratsbehälter (10) zuführt, daß an dem Zwischenbehälter (12) die Dosierorgane (13) des Dosiersystems angeordnet sind, daß mittel vorgesehen sind, die von diesen Dosierorganen (13) aus den Säscharen (15) oder anderen Ausbringelementen das Saatgut zuleiten, daß die Fördereinrichtung ein mechanisches Förderelement, beispielsweise ein Schnecken- oder Kettenförderer (18), ist.

2. Kombination nach Anspruch 1, dadurch gekennzeichnet, daß das Saatgut von dem Vorratsbehälter (10) aus über das mechanische Förderelement (18) zu dem Zwischenbehälter (12) und das überschüssige Saatgut von dem Zwischenbehälter (12) über ein weiteres mechanisches Förderelement (18) zum Vorratsbehälter (10) zurückgeführt wird.

3. Kombination nach einem oder mehrerer der vorstehenden Ansprüche, dadurch gekennzeichnet, daß das Saatgut über ein Kreislaufsystem vom Vorratsbehälter (10) zu dem Zwischenbehälter (12) geführt wird.

4. Kombination nach Anspruch 1 oder 2, dadurch gekennzeichnet, daß in der Wandung des mechanischen Förderelementes (18) im Bereich des Zwischenbehälters (12)Löcher oder Schlitze (21) angeordnet sind.

5. Kombination nach Anspruch 1, 2 oder 4, dadurch gekennzeichnet, daß die Förderleistung des Förderelementes (18) so bemessen ist, daß sie zumindest genauso groß wie die maximale Ausbringmenge von Saatgut ist.

6. Kombination nach Anspruch 1, dadurch gekennzeichnet, daß der Zwischenbehälter (12) mit einer Abdeckung abgedeckt ist und die Fördereinrichtung (18) horizontal durch die Zwischenbehälter (12) oberhalb der Dosierorgane (13) geführt ist.

7. Kombination nach Anspruch 1, dadurch gekennzeichnet, daß die Fördereinrichtung (18) von der Zapfwelle des Ackerschleppers oder über einen Hydraulikmotor (22) angetrieben wird.

8. Kombination nach Anspruch 1, dadurch gekennzeichnet, daß die Dosierorgane (13) des Zwischenbehälters (12) von einem auf dem Boden abrollenden Element angetrieben werden.

9. Kombination nach Anspruch 1, dadurch gekennzeichnet, daß der zentrale Vorratsbehälter (10) auf ein im Frontanbau betriebenes und auf der Bodenoberfläche abgestützes Bodenbearbeitungsgerät (5) angeordnet ist.

10. Kombination nach Anspruch 9, dadurch gekennzeichnet, daß die Fördereinrichtung von diesem Bodenbearbeitungsgerät angetrieben wird.

11. Kombination nach Anspruch 9, dadurch gekennzeichnet, daß das Bodenbearbeitungsgerät ein Frontpacker oder eine Walze (5) ist.

12. Kombination nach Anspruch 1, dadurch gekennzeichnet, daß der Zwischenbehälter (12) mit den antreibbaren Dosierorganen (13) einen Trangrahmen (14) aufweist, an dem die Säschare (15), und daß die Dosierorgane (13) antreibende und auf dem Boden abrollende Element angeordnet ist.

13. Kombination nach Anspruch 1, dadurch gekennzeichnet, daß der Zwischenbehälter (12) mit den antreibbaren Dosierorganen (13) auf bzw. hinter einer hinter dem Ackerschlepper (1) angeordneten Bodenbearbeitungsmaschine oder -gerät (3,7,8) angeordnet ist, und daß die Säschare (15) hinter dieser Bodenbearbeitungsmaschine oder -gerät (3,7,8) angeordnet sind.

14. Kombination nach Anspruch 1, dadurch gekennzeichnet, daß hinter den Säscharen (15) ein Saatstriegel (16) angeordnet ist.

15. Kombination nach Anspruch 1 oder 5, dadurch gekennzeichnet, daß die Förderleistung der Fördereinrichtung (18) einstellbar ist.

16. Kombination nach Anspruch 1, dadurch gekennzeichnet, daß im Frontanbau an den Akkerschlepper (1) eine vorzugsweise lenkbare Bodenwalze (5) angeordnet ist, auf der der zentrale Vorratsbehälter (110) angeordnet ist, daß hinter dem Ackerschlepper (1) im Heckanbau ein zapfwellenbetriebenes Bodenbearbeitungsgerät (7) angeordnet ist, auf welches der Zwischenbehälter (112) mit Dosierorganen (113) und hinter welches die Säschare (15) angeordnet sind, denen das Saatgut aus dem Zwischenbehälter (112) über die Dosierorgane (113) in einstellbaren Mengen über Saatleitungen (17) zugeleitet wird, und daß dem Zwischenbehälter (112) von dem Vorratsbehälter (110) aus über ein mechanisches Kreislaufsystem (118), welches vorzugsweise als flexiebler Schneckenförderer (118) oder Kettenförderer ausgebildet ist, Saatgut in genügender Menge zugeführt wird, zur Benutzung als geschlossene Bestellkombination.

17. Kombination nach Anspruch 1, dadurch gekennzeichnet, daß in dem Zwischenbehälter (112) Schalter (122,123) angeordnet sind, über die der Antrieb der Fördereinrichtung (118) ein- und abzuschalten ist.

18. Kombination nach Anspruch 17, dadurch gekennzeichnet, daß der eine Schalter (123) den minimalen Füllstand und der andere Schalter (122) den maximalen Füllstand des Saatgutes im Zwischenbehälter (112) bestimmt.

**Claims**

1. A combination comprising a tractor and a seed drill with a central hopper (10), which is carried frontally by the tractor, and with a metering system (13) capable of feeding the metered seed in adjustable amounts to the sowing coulters (15) located behind the tractor or to other distributor elements, a conveyor device being provided in order to convey the seed from the hopper to the sowing coulters (15), characterised in that there is located behind the tractor an intermediate container (12), that the conveyor device (18) is located behind the tractor in such a way that it feeds the seed to this intermediate container (12) from the central hopper (10), that the metering units (13) of the metering system are located on the intermediate container (12), that means are provided, which pass the seed from these metering units (13) to the sowing coulters (15) or other distributor elements, that the conveyor device is a mechanical conveyor, for example a worm or chain conveyor (18).

2. A combination according to Claim 1, characterised in that seed is passed from the hopper (10) through the mechanical conveyor means (18) to the intermediate container (12), and the excess seed is returned from the intermediate container (12) through a further mechanical conveyor means (18) back to the hopper (10).

3. A combination according to one or more of the foregoing Claims, characterised in that the seed is passed from the hopper (10) to the intermediate container (12) through a circulatory system.

4. A combination according to Claim 1 or 2, characterised in that that holes or slots (21) are provided in the wall of the mechanical conveyor means (18) in the region of the intermediate container (12).

5. A combination according to Claims 1, 2 or 4, characterised in that the conveyor performance of the conveyor means (18) is so selected that it is at least as great as the maximum outflow rate of seed.

6. A combination according to Claim 1, characterised in that the intermediate container (12) is covered by a lid, and the conveyor device (18) is passed horizontally through the intermediate container (12) above the metering units (13).

7. A combination according to Claim 1, characterised in that the conveyor device (18) is driven from the power take-off shaft of the tractor, or via a hydraulic motor (22).

8. A combination according to Claim 1, characterised in that the metering units (13) of the intermediate container (12) are driven by an element rolling on the ground.

9. A combination according to Claim 1, characterised in that the central hopper (10) is mounted on a frontally-operated soil-cultivator implement (5) supported on the ground.

10. A combination according to Claim 9, characterised in that the conveyor device is driven by this soil-cultivator implement.

11. A combination according to Claim 9, characterised in that the soil-cultivator implement is a frontal compressor or a roller (5).

12. A combination according to Claim 1, characterised in that the intermediate container (12) has, with the drivable metering units (13), a support frame (14) upon which the sowing coulters (15) are located, and that the means driving the metering units (13) and rolling on the ground is also mounted thereon.

13. A combination according to Claim 1, characterised in that the intermediate container (12) is located with the drivable metering units (13) on or behind a soil-cultivator machine or implement (3, 7, 8) located behind the tractor (1), and that the sowing coulters (15) are located behind this soil-cultivator machine or implement (3, 7, 8).

14. A combination according to Claim 1, characterised in that a weeder (16) is located behind the sowing coulters (15).

15. A combination according to Claim 1 or 5, characterised in that the conveyor performance of the conveyor device (18) is adjustable.

16. A combination according to Claim 1, characterised in that there is frontally mounted on the tractor (1) a preferably steerable ground roller (5), upon which there is located the central hopper (110), that there is located behind the tractor (1) a rearwardly-hitched power take-off-driven soil cultivator implement (7), upon which there are located the intermediate container (112) with metering units (113), and behind which sowing coulters (15) are located, to which the seed is passed in adjustable amounts via the metering units (113) through seed pipes (17), and that, through a mechanical circulatory system (118), preferably in the form of a flexible worm conveyor (118) or chain conveyor, seed is passed to the intermediate container (112) from the hopper (110) in sufficient amounts, for use as a selfcontained combined implement.

17. A combination according to Claim 1, characterised in that there are located in the intermediate container (112) switches (122, 123), by means of which the drive for the conveyor device (118) can be switched on and off.

18. A combination according to Claim 17, characterised in that one switch (123) determines the minimum filling level, and the other switch (122) the maximum filling level of seed in the intermediate container (112).

**Revendications**

1. Combinaison formée d'un tracteur agricole et d'un semoir avec un réservoir d'alimentation (10), central qui est porté par l'attelage avant du tracteur ainsi qu'un système de dosage (13) qui fournit la semence dosée aux socs de semoir (15) ou autres éléments distributeurs, à l'arrière du tracteur, un dispositif de transfert (18) assurant le transfert de la semence du réservoir d'alimentation vers les socs de semoir (15), combinaison caractérisée en ce qu'un réservoir intermédiaire (12) est prévu derrière le tracteur, et le dispositif de transfert (18) est associé à ce réservoir intermédiaire (12) pour que la semence soit fournie à partir du réservoir d'alimentation central (10), le réservoir intermédiaire (12) étant équipé des organes de dosage (13) du système de dosage, des moyens étant prévus pour fournir la semence des organes de dosage (13) aux socs (15) ou autres éléments de distribution, le dispositif de transfert étant un élément de transfert mécanique tel qu'une vis transporteuse ou un transporteur à chaîne (18).

2. Combinaison selon la revendication 1, caractérisée en ce que la semence est transférée du réservoir d'alimentation (10) au réservoir intermédiaire (12) par un élément de transfert mécanique (18) et l'excédent de semence est renvoyé du réservoir intermédiaire (12) au réservoir d'alimentation (10) par un autre élément de transfert mécanique (18).

3. Combinaison selon l'une ou plusieurs des revendications précédentes, caractérisée en ce que la semence est transférée du réservoir d'alimentation (10) vers le réservoir intermédiaire (12) par un circuit.

4. Combinaison selon la revendication 1 ou 2, caractérisée en ce que la paroi de l'élément de transfert mécanique (18) comporte des trous ou des fentes (21) au niveau du réservoir intermédiaire (12).

5. Combinaison selon les revendications 1, 2 ou 4, caractérisée en ce que le débit de l'élément de transfert (18) est au moins aussi grand que la quantité maximale de semence à distribuer.

6. Combinaison selon la revendication 1, caractérisée en ce que le réservoir intermédiaire (12) est muni d'un couvercle et le dispositif de transfert (18) passe horizontalement à travers le réservoir intermédiaire (12) au-dessus des organes de dosage (13).

7. Combinaison selon la revendication 1, caractérisée en ce que le dispositif de transfert (18) est entraîné à partir de la prise de force du tracteur ou par un moteur hydraulique (22).

8. Combinaison selon la revendication 1, caractérisée en ce que les organes de dosage (13) du réservoir intermédiaire (12) sont entraînés par un élément roulant sur le sol.

9. Combinaison selon la revendication 1, caractérisée en ce que le réservoir d'alimentation (10), central est monté à l'avant sur un appareil (5) de travail du sol qui s'appuie à la surface du sol.

10. Combinaison selon la revendication 9, caractérisée en ce que le dispositif de transfert est entraîné par cet appareil pour le travail du sol.

11. Combinaison selon la revendication 9, caractérisée en ce que l'appareil pour le travail du sol est un rouleau compacteur avant ou un cylindre (5).

12. Combinaison selon la revendication 1, caractérisée en ce que le réservoir intermédiaire (12) et les organes de dosage (13) comportent un châssis de support (14) qui est muni des socs de semoir (15) ainsi que l'élément qui roule sur le sol et entraîne les organes de dosage (13).

13. Combinaison selon la revendication 1, caractérisée en ce que le réservoir intermédiaire (12) et les organes de dosage (13) entraînés sont prévus sur ou derrière une machine ou appareil (3, 7, 8) pour le travail du sol derrière le tracteur (1) et les socs (15) sont prévus derrière cet appareil ou machine (3, 7, 8).

14. Combinaison selon la revendication 1, caractérisée en ce qu'une raclette à semence (16) est prévue derrière les socs de semoir (15).

15. Combinaison selon la revendication 1 ou 5, caractérisée en ce que le débit du dispositif de transfert (18) est réglable.

16. Ccmbinaison selon la revendication 1, caractérisée de préférence par un rouleau de sol (5) susceptible d'être dirigé, monté à l'avant du tracteur (1) et qui porte le réservoir d'alimentation (110), central et derrière le tracteur (1), en montage arrière, il est prévu un appareil pour le travail du sol (7) entraîné à partir de la prise de force, et sur lequel se trouvent le réservoir intermédiaire (112) et les organes de dosage (113) et derrière lequel se trouvent les socs de semoir (15) qui reçoivent la semence du réservoir intermédiaire (112) par des organes de dosage (113), suivant des quantités réglables par l'intermédiaire de conduite à semence (17) et en ce que le réservoir intermédiaire (112) reçoit la semence en quantité suffisante à partir du réservoir d'alimentation (110) par l'intermédiaire d'un circuit mécanique (118) de préférence en forme de transporteur à vis (118), souple ou de transporteur à chaîne, de manière à servir de combinaison fermée pour le travail du sol.

17. Combinaison selon la revendication 1, caractérisée par des commutateurs (112, 123) prévus dans le réservoir intermédiaire (112) et qui permettent de mettre en oeuvre ou d'arrêter l'entraînement du dispositif de transfert (118).

18. Combinaison selon la revendication 17, caractérisée par un commutateur (123) qui détecte le niveau de remplissage minimum et l'autre commutateur (122) détecte le niveau de remplissage maximum de la semence dans le réservoir intermédiaire (112).

# FIG.1

EP 0 251 053 B1

# FIG.2

EP 0 251 053 B1

FIG.3

EP 0 251 053 B1

FIG. 4